# EUROPÄISCHE PATENTSCHRIFT

(11) **EP 2 682 253 B1**
(45) Veröffentlichungstag und Bekanntmachung des Hinweises auf die Patenterteilung: **18.11.2015**
(21) Anmeldenummer: 12004953.1
(22) Anmeldetag: 04.07.2012
(51) Int. Cl.: B29C 57/04, B29C 33/76, B21D 41/02

(54) **Aufweitwerkzeug und Werkzeug für Installationsrohre**
Expansion tool and tool for installation pipes
Dispositif d'agrandissement et outil pour tuyaux d'installation

(43) Veröffentlichungstag der Anmeldung: 08.01.2014
(73) Patentinhaber: Maryvonne Management & Consulting AG, 6300 Zug (CH)
(72) Erfinder: Reckzeh, Manfred, 63457 Hanau (DE)
(74) Vertreter: Schalch, Rainer

(56) Entgegenhaltungen:
- US-A- 3 677 684

## Beschreibung

### Hintergrund der Erfindung

Die Erfindung betrifft ein ein Verfahren zum Aufweiten des Endes eines Rohrs, insbesondere eines Mehrschichtverbundrohres oder dünnwandigen Metallrohres.

### Stand der Technik

Besonders im Bereich haustechnischer Installationen haben sich in den vergangenen Jahren Verpressungen zum Standardverbindungsverfahren für Rohrleitungen entwickelt. Ferner ist ein zunehmender Einsatz von Mehrschichtverbundrohren zu beobachten. Diese Rohre bestehen aus metallischen und nichtmetallischen Schichten, die durch Kleber sowie Haftvermittler miteinander verbunden sind. Der Vorteil von Mehrschichtverbundrohren besteht in der Reduktion der benötigten kostenintensiven Metallmengen und guter Verarbeitungseigenschaften (z.B. leichter Biegbarkeit), ohne dass bei ihnen die Vorteile metallischer Rohre verlorengehen. Bei einem verbreiteten Typ von Mehrschichtverbundrohren ist eine aus Aluminium bestehende Zwischenschicht aussen und innen mit einer Kunststoffschicht überzogen. Als Ersatz für massive Kupferrohre, die für Trinkwasserleitungen hinsichtlich der lebensmittelchemischen Eigenschaften in der Fachwelt nach wie vor als optimal angesehen werden, wurden Mehrschichtverbundrohre mit einer dünnen Kupferschicht im Inneren sowie einer aussen liegenden Kunststoffummantelung entwickelt. Gerade bei letzteren Rohrtypen stösst jedoch der Einsatz von Presskupplungen auf gewisse Probleme.

Grundsätzlich unterscheidet man zwischen Rohrpresskupplungen vom aussendichtenden Typ, die ohne eine in das Rohrende eingesteckte Steckhülse auskommen, sowie innendichtenden Rohrpresskupplungen, bei denen eine Stützhülse erforderlich ist. Für Verpressungen von Mehrschichtverbundrohren - zumindest bei kleinen Rohrquerschnitten, wie sie in der Installationstechnik gebräuchlich sind - sind erfahrungsgemäss aufgrund der ungünstigeren Kompressionseigenschaften lediglich innendichtende Rohrpresskupplungen unter Verwendung einer Stützhülse verwendbar. Die Stützhülsen sollen, da diese mit dem in den Rohrleitungen geführten Medium in Kontakt kommen, aus einem mit Kupfer elektrochemisch vergleichbaren Material - in der Regel Messing - gefertigt werden. Aufgrund der bei einer Verpressung wirkenden relativ hohen Radialkräfte muss die Wandstärke dieser innenliegenden Stützhülsen relativ hoch dimensioniert werden, was einerseits zu hohen Materialkosten und andererseits - was in der praktischen Anwendung sehr nachteilig ist - zu einer Reduktion des lichten Rohrdurchmesser bei konventionellen Stützhülsen im Bereich kleiner Rohrdurchmesser (z.B. 3/4 Zoll) um ca. 30% bis 60% führt, was bei mehreren, in Reihe geschalteten Verpressungen zu erheblichen und nicht mehr akzeptablen Druck- und Strömungsverlusten führt.

Aus dem Bereich der Rohrverpressungen für Kunststoffrohre ist es bekannt, diese vor dem Verpressen mittels eines Aufweitwerkzeuges aufzuweiten und im aufgeweiteten Zustand, den die Kunststoffrohre aufgrund des Memory-Effektes eine gewisse Zeit beibehalten, auf eine Stützhülse zu schieben, wodurch die Querschnittverengung durch die Wanddicke der Stützhülsen mehr oder weniger kompensiert werden kann. Hierfür verwendete Aufweitwerkzeuge weisen einen hohlzylindrischen Aufweitkörper aus einer Mehrzahl von aneinander anliegend angeordneten Aufweitkörperteilen auf, in deren Innenhohlraum, der konisch ausgebildet ist, für die Aufweitung ein Dorn vorgeschoben wird, wodurch die Aufweitkörperteile expandieren und damit das Rohrende, in welches der Aufweitkörper eingeführt worden ist, aufweiten.

Der Einsatz entsprechender Aufweitwerkzeuge für Mehrschichtverbundrohre hat sich jedoch als problematisch erwiesen, da die einzelnen Teile des Aufweitkörpers des Aufweitwerkzeuges die Aufweitkräfte nicht gleichmässig über den Umfang verteilen, wodurch insbesondere an der Innenseite des Rohres Inhomogenitäten entstehen. Bei Kunststoffrohren stellt dies auf Grund von deren Elastizität kein Problem dar. Bei Mehrschichtverbundrohren hat sich jedoch gezeigt, dass die ungleichmässige Kräfteverteilung schon bei geringen Aufweitmassen zu Rissen in der Metallschicht des Verbundrohres und damit zur Unbrauchbarkeit des Rohrendes führt. Dieses Problem kann auch bei dünnwandigen Metallrohren auftreten.

In EP-A-1 674 241 wird zur Behebung dieses Nachteils eine Glättungshülse vorgeschlagen, welche zwischen den Aufweitkörper des Aufweitwerkzeuges und der Innenseite des Rohres angeordnet wird. Damit kann eine ungleichmässige Verformung durch die einzelnen Aufweitsegmente vermindert werden, ein Reissen der Metallschicht ist aber weiterhin möglich. Aus EP-A-2 153 917 ist ein Aufweitwerkzeug der gattungsgemässen Art bekannt, das eine Begrenzungshülse aufweist. Damit kann eine Beschädigung von Mehrschichtverbundrohren besser vermieden werden. Auch bei diesem Aufweitwerkzeug kann aber der mehrteilige Aufweitkörper zu einer inhomogenen Aufweitung und allenfalls zu Schichtrissen im aufgeweiteten Ende des Rohrs führen. Die US 3 677 684 A zeigt ein Aufweitwerkzeug ohne Kalibrierhülse mit zwei Aufweitbereichen, die für Rohre mit verschiedenem Innendurchmesser vorgesehen sind.

### Darstellung der Erfindung

Der Erfindung liegt die Aufgabe zu Grunde, ein verbessertes Verfahren zur Aufweitung zu schaffen, welches insbesondere für Mehrschichtverbundrohre und für dünnwandige Metallrohre noch besser geeignet ist. Besonders soll damit eine gleichmässigere Aufweitung möglich sein.

Die Aufgabe wird bei einem Verfahren der eingangs genannten Art mit den Merkmalen des Anspruchs 1 gelöst.

Dadurch, dass zwei Aufweitbereiche im Werkzeug mit unterschiedlichem Abstand zwischen Aufspreizkörper und Kalibrierhülse vorgesehen sind, kann die Aufweitung im selben Aufweitwerkzeug in zwei Schritten erfolgen. Eine grössere Aufweitung wird im ersten Aufweitvorgang im ersten Schritt erzeugt und eine geringere Aufweitung im zweiten Schritt im zweiten Aufweitvorgang. Zusammen ergibt sich die gewünschte totale Aufweitung. Die Hülse wirkt dabei als Kalibrierhülse, welche das Aussenmass für das vom Spreizkörper beaufschlagte Ende des Rohrs festlegt Es hat sich gezeigt, dass dadurch die Aufweitung deutlich homogener erfolgen kann, was Beschädigungen des Rohrs beim Aufweiten verhindert. Besonders bevorzugt sind die Abstände zwischen dem Aufweitkörper und der Kalibrierhülse für die beiden durch die Stufe getrennten Aufweitbereiche so ausgeführt, dass sich im ersten Aufweitvorgang eine Aufweitung um ca. 90% ergibt und im zweiten Aufweitbereich die restliche Aufweitung auf 100% der gewünschten bzw. vom Aufweitwerkzeug vorgegebenen Aufweitung erfolgt.

In einer bevorzugten Ausführung ist die Stufe schräg verlaufend ausgebildet, was das Aufschieben des im ersten Aufweitbereich schon aufgeweiteten Rohrs auf den Aufweitkörper im zweiten Aufweitbereich erleichtert. Bei einer weiteren bevorzugten Ausführung ist die Kalibrierhülse auswechselbar am Werkzeuggehäuse angeordnet, was die Verwendung von Kalibrierhülsen verschiedenen Durchmessers für verschiedene Rohrdurchmesser bzw. Rohrdurchmesserbereiche erlaubt. Besonders einfach ist die Auswechslung durchführbar, wenn die Kalibrierhülse zweiteilig ausgestaltet ist und eine am Werkzeuggehäuse befestigte äussere erste Hülse und eine in die erste Hülse einsteckbare zweite Hülse umfasst. Die Entnahme des aufgeweiteten Rohrs wird erleichtert, wenn bei einer bevorzugten Ausführung die Kalibrierhülse eine konisch verlaufende, sich gegen die Einführöffnung der Kalibrierhülse öffnende Innenfläche aufweist. Eine Konizität von wenigen Winkelgraden genügt.

Besonders vorteilhaft ist es, wenn bei geöffnetem Aufweitwerkzeug die dem Spreizdorn gegenüberliegende Fläche des Aufweitkörpers auf ihrer ganzen Länge am Spreizdorn anliegt. Es zeigt sich, dass dadurch ein Kippeffekt der einzelnen Teile des Aufweitkörpers beim Aufweiten vermieden werden kann, was die Gefahr von Rissen in Schichten des Rohrs verringert, sowie eine zylindrische Aufweitung über einen längeren Bereich ermöglicht wird. Der Spreizdorn ist dabei mit seinem vorderen Ende in Ruheposition des Aufweitwerkzeugs (die der geöffneten Position des Werkzeugs entspricht, in welcher das Ende des Rohrs in das Werkzeug eingeführt wird) bündig mit dem Ende des Aufweitkörpers oder steht über dieses vor.

Weiter ist es bevorzugt, dass der konische Spreizdorn im Aufweitwerkzeug derart befestigt ist, dass der Spreizdorn auswechselbar ist. Es kann somit aus einem Satz von Spreizdornen auf einfache Weise der für die gewünschte Aufweitung mit seiner Konizität (die z.B. im Bereich von 5 Grad bis 10 Grad liegt) passende Spreizdorn ausgewählt und im Aufweitwerkzeug eingesetzt werden. Der Spreizdorn kann z.B. an seinem hinteren Ende, mit welchem er an der Betätigungseinrichtung befestigt ist, mit einem Schraubgewinde versehen sein, das ein Anschrauben oder Einschrauben an der Betätigungseinrichtung erlaubt.

Bei einer besonderen Ausführungsform kann im aufgeweiteten Ende des Rohrs zusammen mit der Aufweitung im zweiten Aufweitbereich eine Sicke eingeprägt werden. Dazu ist der Aufweitkörper in seinem zweiten Aufweitbereich mit einer ringförmigen Ausformung versehen (die auch unterbrochen sein kann, wenn die Sicke Unterbrechungen aufweisen soll), welche Ausformung sich beim zweiten Aufweitschritt in das Rohrmaterial einprägt. Wenn die Kalibrierhülse eine mit der ringförmigen Ausformung lagekorrespondierende Ausnehmung aufweist, so kann eine tiefere Sicke geprägt werden.

### Kurze Beschreibung der Zeichnungen

Im Folgenden werden Ausführungsbeispiele der Erfindung anhand der Figuren näher erläutert. Dabei zeigt
Figur 1 eine Frontalansicht auf ein Aufweitwerkzeug zur Erläuterung des Verfahrens gemäss der Erfindung mit dem Aufweitkörper in der Ruheposition und mit einem eingeführten Ende eines Rohrs, das noch nicht aufgeweitet ist;
Figur 2 eine Vertikalschnittansicht durch das Aufweitwerkzeug in der Position von Figur 1 und mit dem in den ersten Aufweitbereich eingeführten Rohr;
Figur 3 die Ansicht von Figur 2 nach Aufweitung des Rohr im ersten Aufweitbereich;
Figur 4 eine Ansicht, bei welcher das Aufweitwerkzeug wieder in Ruheposition ist und das aufgeweitete Ende des Rohrs in den zweiten Aufweitbereich eingeführt worden ist;
Figur 5 das Aufweiten des Rohrs im zweiten Aufweitbereich durch den Aufweitkörper;
Figur 6 ein Werkzeug gemäss einem nicht erfindungsgemässen Aspekt der Erfindung in Ruheposition des Werkzeugs und in einer Vertikalschnittansicht in einer Ausführung, bei der der Spreizkörper eine Ausformung und die Kalibrierhülse eine mit ihrer Lage zur Ausformung korrespondierende Ausnehmung aufweist;
Figur 7 die Ansicht von Figur 6 aber in Arbeitsposition des Werkzeugs in welcher die Sicke in das Rohr eingepresst worden ist;
Figur 8 eine weitere nicht erfindungsgemässe Ausführung wie Figur 6 aber ohne Ausnehmung in der Kalibrierhülse; und
Figur 9 die Ausführung von Figur 8 in der Arbeitsposition.

### Ausführungen der Erfindung

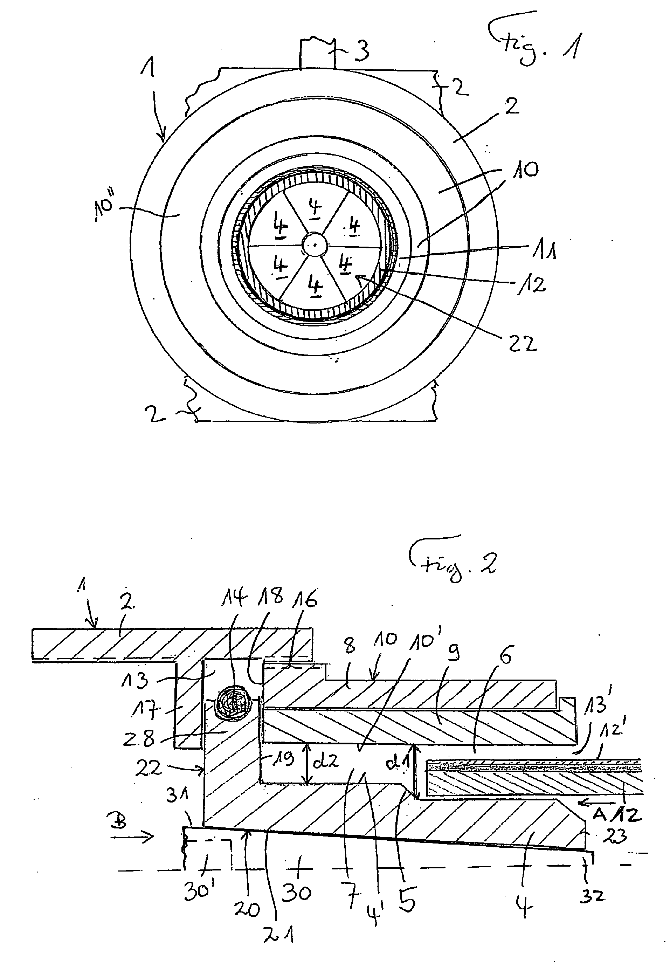

Anhand der Figuren 1-5 wird das Verfahren im Hinblick auf eine erste Ausführungsform des Aufweitwerkzeuges beschrieben. Figur 1 zeigt dabei eine Frontalansicht auf das Werkzeug von vorne bzw. eine Ansicht in Richtung des Pfeiles A von Figur 2. Figur 2 zeigt eine Vertikalschnittansicht durch einen Teil des Werkzeuges, wobei nur die Teile oberhalb der Längsmittelachse R dargestellt sind, da das Werkzeug betreffend die für die Erfindung relevanten Elemente des Werkzeugs im Wesentlichen rotationssymmetrisch um diese Achse R aufgebaut ist. In Figur 1 ist der Aufweitkörper 22 ersichtlich, welcher auf an sich bekannte Weise aus mehreren Aufweitkörperteilen 4 aufgebaut ist. In diesem Beispiel sind dies sechs Aufweitkörperteile. Dieser Aufweitkörper 22 ist in einem Werkzeuggehäuse 2 angeordnet, welches in den Figuren nur angedeutet ist und in der dem Fachmann für diese Werkzeuge bekannten Weise gebildet ist, soweit nicht nachfolgend etwas Abweichendes geschildert wird. Das Aufweitwerkzeug kann ein handbetätigtes Werkzeug sein oder allenfalls ein pneumatisch oder elektrisch betätigtes Aufweitwerkzeug. In den Figuren ist lediglich mit dem Hebelabschnitt 3 ein Element des Betätigungsmittels angedeutet sowie in den Figuren 2 bis 5 mit dem Spreizdorn 30 das hauptsächliche Element des Betätigungsmittels zur Aufspreizung des Aufweitkörpers angedeutet, was noch erläutert wird. In der in den Figuren 1 und 2 dargestellten Ruheposition des Aufweitwerkzeugs bzw. der Einführungsposition für das aufzuweitende Ende des Rohrs 12 liegen die Teile 4 des Aufweitkörpers im Wesentlichen aneinander an und der Aufweitkörper ist im Ruhezustand mit seinem geringsten Durchmesser. In den geschnittenen Darstellungen der Figuren 2 bis 5 ist ersichtlich, dass der Aufweitkörper eine sich ringförmig um den Aufweitkörper 22 herum erstreckende Stufe 5 aufweist. Diese ist hier als abgeschrägte Stufe gezeigt, was bevorzugt ist. Die Stufe 5 des Aufweitkörpers trennt einen ersten Aufweitbereich 6 des Aufweitwerkzeugs von einem zweiten Aufweitbereich 7 des Aufweitwerkzeugs. Im dargestellten Ruhezustand (bzw. bei nicht gespreiztem Aufweitkörper) besteht ein Abstand zwischen der Aussenfläche 4' des Aufweitkörpers 22 und der Innenfläche 10' einer Kalibrierhülse 10 des Aufweitwerkzeugs. Im ersten Aufweitbereich 6, der sich von der Einschuböffnung 13 für das Ende des Rohrs bis zur Stufe 5 erstreckt ist dieser Abstand grösser als im zweiten Aufweitbereich 7, der sich von der Stufe 5 bis zu einem hinteren Anschlag 19 des Aufweitkörpers erstreckt. In Figur 2 ist der Abstand beim ersten Aufweitbereich 6 mit d1 eingetragen und im zweiten Aufweitbereich mit d2. Die Abstände sind dabei so gewählt, dass sich im ersten Aufweitbereich 6 eine Aufweitung um ca. 90% der maximalen Aufweitung ergibt, wenn der Aufweitkörper gespreizt wird und dass sich im zweiten Aufweitbereich 7 die restliche Aufweitung bis zur maximalen Aufweitung ergibt. Dies wird nachfolgend noch erläutert. In Figur 2 ist dargestellt, dass das Ende eines mehrschichtigen Verbundrohrs 12 auf den Aufweitkörper 22 aufgeschoben ist, wobei dies bis zur Stufe 5 hin erfolgt ist. Das aufzuweitende Ende des Rohrs 12 befindet sich somit im ersten Aufweitbereich 6 und der zweite Aufweitbereich 7 ist für den ersten Schritt der Aufweitung unbenutzt.

Der Aufweitkörper 22 weist in der Regel eine im Wesentlichen zylindrische Aussenform auf. Die einzelnen Teile 4 des Aufweitkörpers 22 werden z.B. durch ein elastisches Element 14 zusammengehalten, welches z.B. ein O-Ring aus Gummi sein kann. Der derart gebildete Aufweitkörper 22 ist im Gehäuse 2 des Aufweitwerkzeuges 1 gehalten und geführt, wobei dies im gezeigten Beispiel durch eine ringförmige Nut 13 erfolgt, welche durch einen Steg 17 und einen Anschlag 18 gebildet ist. In dieser Nut ist ein ringförmiger Flansch 28 des Aufweitkörpers 22 aufgenommen, der an den einzelnen Teilen 4 ausgebildet ist. Der Aufweitkörper 22 weist ferner eine innere Öffnung 20 auf, deren Wandung 21 konisch hin zur Stirnseite 23 des Aufweitkörpers 22 verläuft. Dies ermöglicht die Aufweitbewegung durch das Einführen eines konischen Spreizdorns 30 in den Hohlraum 20, welcher die einzelnen Teile des Aufweitkörpers radial nach aussen presst, wenn der Spreizdorn in Richtung des Pfeils B verschoben wird, was nachfolgend noch genauer erläutert wird. Die Verschiebung bzw. Betätigung des Spreizdorns 30 in Richtung des Pfeiles B wird hier nicht weiter erläutert, da sie dem Fachmann bei diesen Werkzeugen bekannt ist. Der Spreizdorn 30 kann dadurch handbetätigte Hebel in Richtung B angetrieben werden und auch in Gegenrichtung wieder zurückgezogen werden oder der Dorn 30 kann pneumatisch, hydraulisch oder auf andere Weise angetrieben sein.

Bevorzugt ist der Spreizdorn 30 auswechselbar an dem Betätigungsmittel des Aufweitwerkzeugs befestigt, was in Figur 2 mit einer Ausnehmung 30' mit Innengewinde angedeutet ist. Dies ermöglicht die Auswechslung eines Spreizdorns gegen einen anderen Spreizdorn, wobei sich die Spreizdorne insbesondere in der Steigung ihrer Konizität unterscheiden können, die z.B. zwischen 5 Grad und 10 Grad liegen kann.

Weiter ist es bevorzugt, wenn der Aufweitkörper 22 mit seiner Wandung 21 schon in der in Figur 2 dargestellten Ruhestellung ganz auf dem Spreizdorn 30 aufliegt. Mit anderen Worten hat der Spreizdorn 30 eine so grosse Länge, dass er schon in Ruhestellung - noch ohne Verschiebung in Richtung B durch die Betätigungseinrichtung - bis zum vorderen Ende 23 des Aufweitkörpers 22 reicht oder sogar darüber hinaus reicht, wie dargestellt. Es hat sich gezeigt, dass dadurch eine gleichförmigere Aufweitbewegung erzielbar ist, was eine Beschädigung des Rohrs ebenfalls vermeidet.

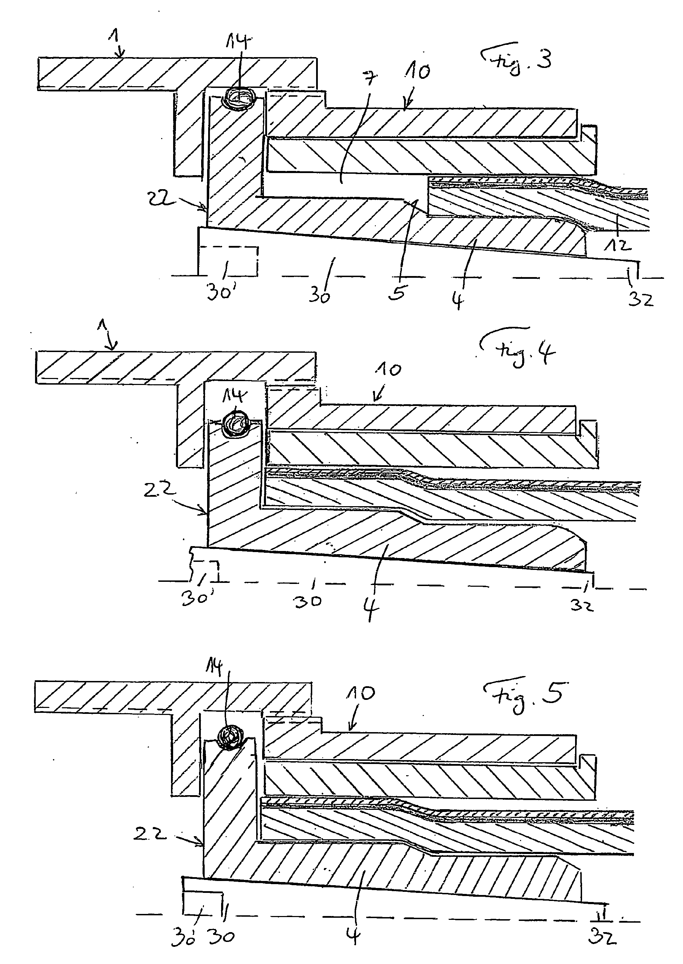

In Figur 3 ist dargestellt, dass der Spreizdorn 30 in Richtung B vorgetrieben worden ist, was den Aufweitkörper 22 bzw. dessen Teile 4 auseinander treibt. Dadurch wird das Ende des Rohrs aufgeweitet. Diese Aufweitung wird durch die Kalibrierhülse 10 begrenzt, wobei die Aussenseite 12' des aufgeweiteten Endes des Rohrs 12 zum Anliegen an der Innenseite 10' der Kalibrierhülse 10 kommt. Die Kalibrierhülse 10 ist vorzugsweise auswechselbar am Werkzeuggehäuse 2 befestigt, z.B. mittels der dargestellten Schraubverbindung 16. Besonders bevorzugt ist die dargestellte zweiteilige Ausführung der Kalibrierhülse 10, bei welcher diese einen äusseren Hülsenteil 8 und eine Einschubhülse 9 aufweist, die in den äusseren Hülsenteil 8 einschiebbar ist. Damit wird die Auswechslung der Kalibrierhülse und damit die Einstellung der Abstände d1 und d2 durch die Wahl unterschiedlicher Kalibrierhülsen vereinfacht.

Die Aufweitung mittels des ersten Aufweitbereichs 6 bzw. der erste Aufweitvorgang soll ca. 90% der total gewünschten Aufweitung des Endes des Rohrs ergeben. Dies kann durch die Wahl der entsprechenden Kalibrierhülse bestimmt werden.

Figur 4 zeigt, dass das Aufweitwerkzeug wieder in der Ruheposition ist. Dies wird erreicht, indem durch die Betätigungseinrichtung der Spreizdorn 30 wieder zurückgezogen wird (entgegen der Pfeilrichtung B). Durch das elastische Element 14 folgt auch der Aufweitkörper 22 dieser Bewegung und nimmt wieder die Ruhestellung ein. Nun kann das zuvor im ersten Aufweitbereich aufgeweitete Ende des Rohrs über die Stufe 5 in den zweiten Aufweitbereich 7 geschoben werden. Dabei kann das Rohr 12 zusätzlich etwas um seine Längsachse gedreht werden.

Figur 5 zeigt den folgenden zweiten Aufweitschritt. Erneut wird der Spreizdorn in Richtung B vorgeschoben, um den Aufweitkörper auseinander zu treiben. Das Ende des Rohrs wird dadurch im zweiten Aufweitbereich 7 gegen die Kalibrierhülse hin aufgeweitet und diese begrenzt die Aufweitung. Mit diesem zweiten Aufweitschritt wird die gesamte gewünschte Aufweitung erreicht.

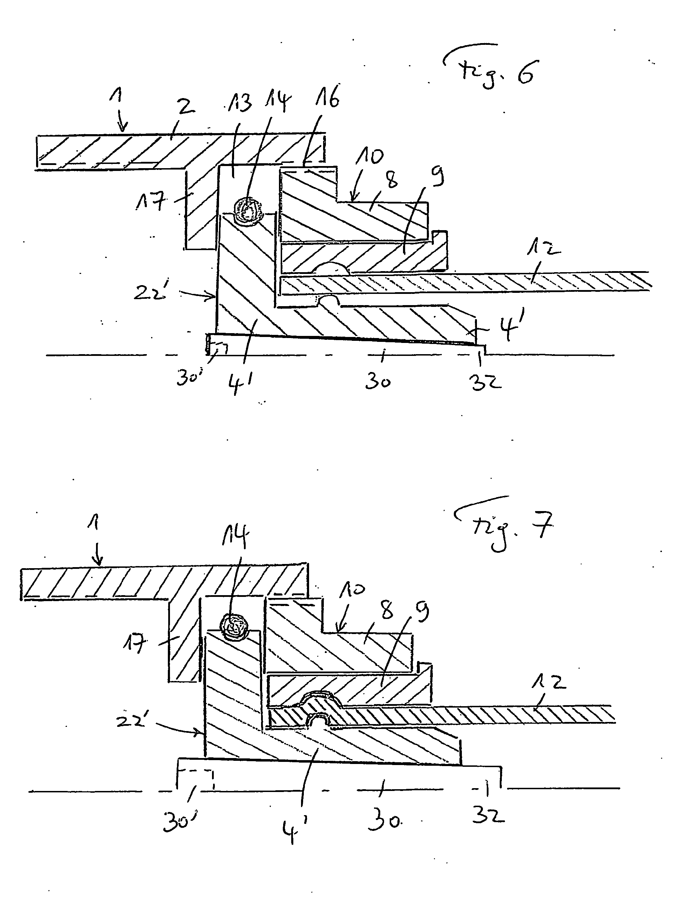

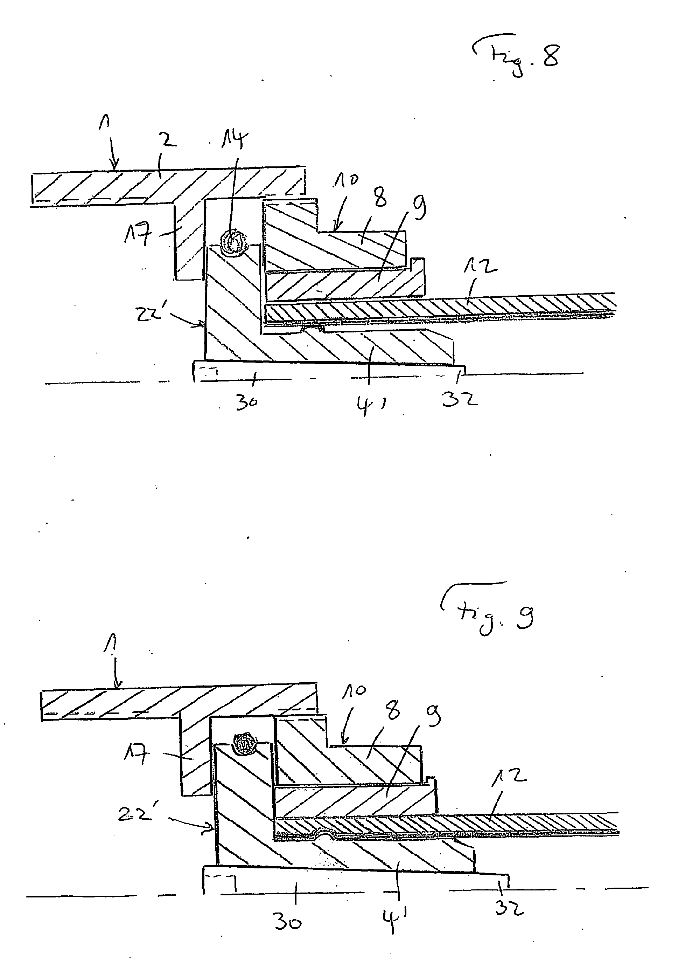

Im zweiten Aufweitbereich 7 könnte eine Ausformung am Aufweitkörper 22 vorgesehen sein, wie das nachfolgend anhand von Figur 6 oder Figur 8 bei einem anderen Werkzeug dargestellt ist. Ferner könnte in der Kalibrierhülse eine Ausnehmung vorgesehen sein, die mit ihrer Lage mit der Ausformung am Aufweitkörper 22 korrespondiert, wie das in Figur 6 dargestellt ist, so dass beim zweiten Aufweitschritt eine Sicke in das Material des Rohres eingepresst wird.

Somit wird bei einem Aufweitwerkzeug 1 für Rohrenden ein Aufweitkörper 22 mit einer diesen umgebenden Kalibrierhülse 10 versehen. Die Aufweitung erfolgt gegen die Kalibrierhülse, die eine definierte Aufweitung im Werkzeug ergibt. Der Aufweitkörper weist eine Stufe 5 auf. Dies ergibt zwei verschiedene Aufweitbereiche 6, 7, die in zwei Schritten nacheinander zum Einsatz kommen. In einem ersten Schritt erfolgt eine Aufweitung um ca. 80% bis 90% der total gewünschten Aufweitung und in einem zweiten Schritt die restliche Aufweitung. Damit ist das Werkzeug gut für Mehrschichtverbundrohre geeignet, die zum Aufreissen von deren Schichten neigen, wenn das Rohr aufgeweitet wird.

Die Figuren 6 bis 9 zeigen ein nicht erfindungsgemässes Werkzeug, welches sehr ähnlich aufgebaut ist, wie das vorbeschriebene Aufweitwerkzeug. Das Werkzeug gemäss den Figuren 6 bis 9 weitet aber nicht das Ende des Rohres auf, sondern presst in dieses eine Sicke ein. Gleiche oder funktionsgleiche Teile wie beim Aufweitwerkzeug der Figuren 1 bis 5 sind mit gleichen Bezugszeichen versehen. Es wird dazu auf die vorgängige Beschreibung verwiesen, die hier durch Bezugnahme auf die vorhergehenden Seiten übernommen wird. So ist insbesondere ebenfalls ein Werkzeuggehäuse 2 und eine Kalibrierhülse 10, die insbesondere zweiteilig mit einer äusseren Hülse 8 und einer inneren Hülse 9 ausgeführt ist, vorgesehen. In der Ausführung der Figuren 6 und 7 ist die Einschubhülse geteilt. Ein Spreizkörper 22', der aus mehreren Spreizkörperteilen 4 gebildet ist, wie der Aufweitkörper 22, wird durch einen Spreizdorn 30 aufgespreizt, wenn dieser in Richtung B vorgetrieben wird. Dazu ist eine nicht dargestellte Betätigungseinrichtung vorhanden. Zu deren Ausgestaltung wird auf die vorgängige Beschreibung zum Aufweitwerkzeug verwiesen. Ersichtlich ist in den Figuren 6 und 7, dass der Spreizkörper und die Kalibrierhülse hier so ausgestaltet und angeordnet sind, dass sich keine Aufweitung des Endes des Rohres 12 ergibt. Durch eine Ausformung 25 am Spreizkörper 22' und eine Ausnehmung 26 in der Kalibrierhülse 10, die in ihrer Lage mit der Ausformung 25 korrespondiert, ergibt sich aber eine Verformung des Rohrmaterials, wenn der Spreizkörper durch den Spreizdorn aufgeweitet wir. Dadurch wird eine Sicke oder in anderen Worten eine ringförmige Nut in das Ende des Rohrs eingepresst. Diese kann z.B. zur Aufnahme eines O-Rings dienen. Die Figuren 8 und 9 zeigen eine Variante, bei der nur die Ausformung 25 vorgesehen ist, nicht aber die Ausnehmung 26 in der Kalibrierhülse. Damit wird eine Sicke bzw. Nut geringerer Tiefe in das Rohr eingebracht. Die äussere Wandung des Rohrs bleibt bei dieser Variante im Wesentlichen eben und weist keine Erhebung auf, wie dies bei der Variante der Figuren 6 und 7 der Fall ist.

## Patentansprüche

1. Verfahren zum Aufweiten des Endes eines Rohrs, insbesondere eines Mehrschichtverbundrohrs oder eines Installationsrohrs aus Metall, **dadurch gekennzeichnet, dass** ein zweistufiger Aufweitvorgang mit einem Aufweitwerkzeug (1) erfolgt, das zum Aufweiten des Endes eines Rohres (12) ausgestaltet ist und ein Werkzeuggehäuse (2), eine Betätigungsanordnung mit einem Spreizdorn (3, 30), einen durch den Spreizdorn (30) aufweitbaren mehrteiligen Aufweitkörper (22; 22') sowie eine am Werkzeuggehäuse (2) befestigte, den Aufweitkörper umgebende Hülse umfasst, wobei der Aufweitkörper (22) eine Stufe aufweist, derart, dass das Aufweitwerkzeug zwei verschiedene zur Aufweitung vorgesehene Aufweitbereiche mit unterschiedlichem Abstand zwischen dem Aufweitkörper und der als Kalibrierhülse wirkenden Hülse (10) aufweist, wobei in einem ersten Aufweitvorgang mittels des Aufweitkörpers im Bereich vor der Stufe eine Aufweitung des Rohrendes um mehr als 80% aber weniger als 100% der gewünschten Aufweitung des Rohrendes erfolgt, und danach die Aufweitung auf 100% der gewünschten Aufweitung in einem zweiten Aufweitvorgang mit dem Aufweitkörper im Bereich hinter der Stufe erfolgt.

2. Verfahren nach Anspruch 1, **dadurch gekennzeichnet, dass** der Abstand des ersten Aufweitbereichs für eine Aufweitung von ca. 90% ausgestaltet ist und der Abstand des zweiten Aufweitbereichs für die restliche Aufweitung auf 100% ausgestaltet ist.

3. Verfahren nach Anspruch 1 oder 2, **dadurch gekennzeichnet, dass** die Stufe abgeschrägt ausgebildet ist.

4. Verfahren nach einem der Ansprüche 1 bis 3, **dadurch gekennzeichnet, dass** die Kalibrierhülse (10) auswechselbar am Werkzeuggehäuse angeordnet ist.

5. Verfahren nach Anspruch 4, **dadurch gekennzeichnet, dass** die Kalibrierhülse (10) zweiteilig ausgestaltet ist und eine am Werkzeuggehäuse befestigte äussere erste Hülse und eine in die erste Hülse einsteckbare zweite Hülse umfasst.

6. Verfahren nach einem der Ansprüche 1 bis 5, **dadurch gekennzeichnet, dass** die Kalibrierhülse eine konisch verlaufende, sich gegen die Einführöffnung der Kalibrierhülse öffnende Innenfläche aufweist.

7. Verfahren nach einem der Ansprüche 1 bis 6, **dadurch gekennzeichnet, dass** bei geöffnetem Aufweitwerkzeug die dem Spreizdorn (30) gegenüberliegende Fläche des Aufweitkörpers auf ihrer ganzen Länge am Spreizdorn anliegt.

8. Verfahren nach einem der Ansprüche 1 bis 7, **dadurch gekennzeichnet, dass** der Spreizdorn im Aufweitwerkzeug derart befestigt ist, dass der Spreizdorn auswechselbar ist.

9. Verfahren nach einem der Ansprüche 1 bis 8, **dadurch gekennzeichnet, dass** der Aufweitkörper im Aufweitbereich mit geringerem Abstand zwischen Aufweitkörper und Kalibrierhülse eine ringförmige Ausformung aufweist.

10. Verfahren nach Anspruch 9, **dadurch gekennzeichnet, dass** die Kalibrierhülse eine mit der ringförmigen Ausformung lagekorrespondierende Ausnehmung aufweist.

## Claims

1. Method for widening the end of a pipe, particularly of a multi-layer composite pipe or of an installation pipe made of metal, **characterized in that** a two-stage widening process with a widening tool (1) is carried out, being adapted to widen the end of a pipe (12) and a tool casing (2), an actuation arrangement with an expanding mandrel (3, 30), a multi-part widening body (22; 22') which can be widened by the expanding mandrel (30) as well as a sleeve surrounding the widening body and attached to the tool casing (2), wherein the widening body (22) has a stage such that the widening tool has two different widening areas provided for widening, with a different distance between the widening body and the sleeve (10) acting as calibrating sleeve, wherein in a first widening cycle a widening of the pipe end by more than 80% but less than 100% of said widening of the pipe end is done by means of the widening body in the area before the first stage, and thereafter the widening to 100% of the desired widening is done in a second widening cycle by the widening body in the area behind the stage.

2. Method according to claim 1, **characterized in that** the distance of the first widening area is adapted for a widening of about 90% and the distance of the second widening area is adapted to 100% for the rest of the widening.

3. Method according to claim 1 or 2, **characterized in that** the stage is adapted to be slanted.

4. Method according to one of the claims 1 to 3, **characterized in that** the calibrating sleeve (10) is arranged in a replaceable manner on the tool casing.

5. Method according to claim 4, **characterized in that** the calibrating sleeve (10) is formed in two pieces and comprises an outer first sleeve attached to the tool casing and a second sleeve insertable into the first sleeve.

6. Method according to one of the claims 1 to 5, **characterized in that** the calibrating sleeve has an inner surface running conically and opening towards the insertion opening of the calibrating sleeve.

7. Method according to one of the claims 1 to 6, **characterized in that** the surface of the widening tool, which is arranged opposite of the expanding mandrel (30) in case of opened widening tool lies on the expanding mandrel over its entire length.

8. Method according to one of the claims 1 to 7, **characterized in that** the expanding mandrel is attached inside the widening tool in such a way that the expanding mandrel is replaceable.

9. Method according to one of the claims 1 to 8, **characterized in that** the widening body has an annular shaping in the widening area, with a smaller distance between the widening body and the calibrating sleeve.

10. Method according to claim 9, **characterized in that** the calibrating sleeve has a cavity corresponding to the annular shaping with respect to length.

## Revendications

1. Procédé d'élargissement de l'extrémité d'une conduite, particulièrement d'une conduite composite multicouche ou d'une conduite d'installation en métal, **caractérisé en ce qu'**un processus d'élargissement en deux étapes est effectué avec un outil d'élargissement (1), étant adapté à élargir l'extrémité d'une conduite (12) et une carcasse d'outil (2), un arrangement d'actionnement avec un mandrin d'expansion (3, 30), un corps d'élargissement avec des multiples parties (22; 22') qui peut être élargit par le mandrin d'expansion (30) ainsi qu'une manchette entourant le corps d'élargissement et attachée à la carcasse d'outil (2), le corps d'élargissement (22) ayant une station telle que l'outil d'élargissement a deux zones d'élargissement différentes prévues pour l'élargissement, avec des différentes distances entre le corps d'élargissement et la manchette (10) agissant comme manchette de calibration, un élargissement de l'extrémité de la conduite par plus de 80% mais moins de 100% dudit élargissement désiré de l'extrémité de la conduite étant effectué par le corps d'élargissement dans la zone avant la première station dans un premier cycle d'élargissement, et ensuite l'élargissement de 100% de l'élargissement désiré étant effectué dans un deuxième cycle d'élargissement par le corps d'élargissement dans la zone après la station.

2. Procédé selon la revendication 1, **caractérisé en ce que** la distance de la première zone d'élargissement est adapté pour un élargissement d'environ 90% et la distance de la deuxième zone d'élargissement est adaptée à 100% pour le reste de l'élargissement.

3. Procédé selon la revendication 1 ou 2, **caractérisé en ce que** la station est adaptée à être oblique.

4. Procédé selon l'une des revendications 1 à 3, **caractérisé en ce que** la manchette de calibration (10) est arrangée de manière remplaçable à la carcasse d'outil.

5. Procédé selon la revendication 4, **caractérisé en ce que** la manchette de calibration (10) est formée en deux pièces et comprend une première manchette extérieure attachée à la carcasse d'outil et une deuxième manchette introduite dans la première manchette.

6. Procédé selon l'une des revendications 1 à 5, **caractérisé en ce que** la manchette de calibration a une surface intérieure conique et s'ouvre vers l'ouverture d'introduction de la manchette de calibration.

7. Procédé selon l'une des revendications 1 à 6, **caractérisé en ce que** la surface de l'outil d'élargissement arrangée du côté opposé du mandrin d'expansion (30) en cas d'un outil d'élargissement ouvert s'allonge sur le mandrin d'expansion sur toute sa longueur.

8. Procédé selon l'une des revendications 1 à 7, **caractérisé en ce que** le mandrin d'expansion est attaché à l'intérieur de l'outil d'élargissement de sorte que le mandrin d'expansion est remplaçable.

9. Procédé selon l'une des revendications 1 à 8, **caractérisé en ce que** le corps d'élargissement a une forme annulaire dans la zone d'élargissement, avec une distance inférieure entre le corps d'élargissement et la manchette de calibration.

10. Procédé selon la revendication 9, **caractérisé en ce que** la manchette de calibration a une cavité correspondant à la forme annulaire par rapport à la longueur.
